(19) Europäisches Patentamt / European Patent Office / Office européen des brevets

(11) **EP 4 564 236 A1**

(12) **EUROPEAN PATENT APPLICATION**
published in accordance with Art. 153(4) EPC

(43) Date of publication:
04.06.2025 Bulletin 2025/23

(51) International Patent Classification (IPC):
*G06N 10/00* (2022.01)    *G06N 10/20* (2022.01)

(21) Application number: 23845490.4

(86) International application number:
PCT/CN2023/108852

(22) Date of filing: 24.07.2023

(87) International publication number:
WO 2024/022280 (01.02.2024 Gazette 2024/05)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 25.07.2022 CN 202210884668

(71) Applicant: **Alibaba Damo (hangzhou) Technology Co., Ltd.**
**Hangzhou Zhejiang 310023 (CN)**

(72) Inventors:
• **WU, Feng**
**Hangzhou, Zhejiang 311121 (CN)**

• **MA, Xizheng**
**Hangzhou, Zhejiang 311121 (CN)**
• **ZHANG, Gengyan**
**Hangzhou, Zhejiang 311121 (CN)**
• **CHEN, Jianjun**
**Hangzhou, Zhejiang 311121 (CN)**
• **XIA, Tian**
**Hangzhou, Zhejiang 311121 (CN)**
• **ZHAO, Huihai**
**Beijing 100102 (CN)**

(74) Representative: **Novagraaf Technologies**
**2 rue Sarah Bernhardt**
**CS90017**
**92665 Asnières-sur-Seine Cedex (FR)**

(54) **METHOD AND CIRCUIT FOR IMPLEMENTING TWO-QUBIT GATE**

(57) Disclosed are a method and a circuit for implementing a two-qubit gate. The method includes: applying a coupling control signal to an adjustable coupler, wherein the adjustable coupler is a coupler between a first data qubit and a second data qubit; and activating, by means of adjusting the coupling control signal, longitudinal coupling between the first data qubit and the second data qubit within a predetermined time, so as to implement the two-qubit gate. The present disclosure solves the technical problem in the related art of low precision of the two-qubit gate.

Fig. 1

A coupling control signal is applied to an adjustable coupler, where the adjustable coupler is a coupler between a first data qubit and a second data qubit — S102

By means of adjusting the coupling control signal, longitudinal coupling between the first data qubit and the second data qubit is activated within a predetermined time, so as to implement a two-qubit gate — S104

EP 4 564 236 A1

## Description

The present application claims priority to Chinese Patent Application No. 202210884668.1, filed to the China National Intellectual Property Administration on July, 25, 2022 and entitled "Method and Circuit for Implementing Two-Qubit Gate", the disclosure of which is hereby incorporated by reference in its entirety.

## Technical Field

The present disclosure relates to the field of quantum computing, and in particular, to a method and a circuit for implementing a two-qubit gate.

## Background

In the related art, there is a method of performing qubit coupling by using a capacitor to construct a two-qubit gate. However, due to the properties of the qubit, the two-qubit gate obtained by this method is not ideal and the precision is not high enough.

Therefore, in the related art, there is a technical problem of low precision of the two-qubit gate.

For the above problem, no effective solution has yet been proposed.

## Summary

Embodiments of the present disclosure provide a method and a circuit for implementing a two-qubit gate, so as to at least solve the technical problem in the related art of low precision of the two-qubit gate.

According to one aspect of the embodiments of the present disclosure, a method for implementing a two-qubit gate is provided, which includes: applying a coupling control signal to an adjustable coupler, where the adjustable coupler is a coupler between a first data qubit and a second data qubit; and activating, by means of adjusting the coupling control signal, longitudinal coupling between the first data qubit and the second data qubit within a predetermined time, so as to implement the two-qubit gate.

Optionally, the operation of activating, by means of adjusting the coupling control signal, longitudinal coupling between the first data qubit and the second data qubit within a predetermined time, so as to implement the two-qubit gate includes: activating, by means of adjusting the coupling control signal, the longitudinal coupling between the first data qubit and the second data qubit within the predetermined time, and controlling other coupling between the first data qubit and the second data qubit to be minimum, so as to implement the two-qubit gate, where the other coupling is coupling other than the longitudinal coupling.

Optionally, the operation of activating, by means of adjusting the coupling control signal, the longitudinal coupling between the first data qubit and the second data qubit within the predetermined time, and controlling other coupling between the first data qubit and the second data qubit to be minimum includes: determining a target adjustment parameter of the coupling control signal, where the target adjustment parameter includes at least one of the following: an amplitude of the coupling control signal and a period of the coupling control signal; obtaining an adjusted coupling control signal by means of adjusting the target adjustment parameter of the coupling control signal; and activating, by means of applying the adjusted coupling control signal to the adjustable coupler, the longitudinal coupling between the first data qubit and the second data qubit within the predetermined time, and controlling the other coupling between the first data qubit and the second data qubit to be minimum.

Optionally, the operation of determining a target adjustment parameter of the coupling control signal includes: determining multiple coupling items included in the other coupling; respectively determining candidate adjustment parameters corresponding to the coupling control signal when the multiple coupling items are minimal; and determining, based on a predetermined optimization method and the candidate adjustment parameters, the target adjustment parameter of the coupling control signal when the multiple coupling items are simultaneously minimal.

Optionally, the first data qubit is a first Fluxonium qubit, and the second data qubit is a second Fluxonium qubit.

Optionally, after the first data qubit, the second data qubit, and the adjustable coupler are connected, a structure formed includes at least one of the following: a single-loop inductively coupled Fluxonium structure, a grounded dual-loop Superconducting Quantum Interference Device (SQUID) structure, and a suspended single-loop SQUID structure.

Optionally, before applying the coupling control signal to the adjustable coupler, the method further includes: in a case where the structure formed by the first data qubit, the second data qubit, and the adjustable coupler is the single-loop inductively coupled Fluxonium structure or the grounded double-loop SQUID structure, adjusting the first data qubit and the second data qubit to be in a flux sweet spot state, and adjusting the external magnetic flux of the adjustable coupler to be a minimum value; and in a case where the structure formed by the first data qubit, the second data qubit, and the adjustable coupler is the suspended single-loop SQUID structure, adjusting the first data qubit and the second data qubit to be in a mobile sweet spot state, so that the longitudinal action of a quantum data bit of the adjustable coupler is a minimum value, where the flux sweet spot state is that the decoherence time of the data qubit reaches a maximum value, and the mobile sweet spot state is the flux sweet spot state corresponding to the offset movement of the adjustable coupler.

Optionally, the coupling control signal is a hyperbolic tangent pulse signal.

According to another aspect of the embodiments of the present disclosure, a circuit for implementing a two-qubit gate is further provided, which includes: a first data qubit, a second data qubit, an adjustable coupler between the first data qubit and the second data qubit, a signal generator, and a signal controller. The signal generator is configured to generate a coupling control signal and apply the coupling control signal to the adjustable coupler. The signal controller is configured to activate, by means of controlling the signal generator to adjust the coupling control signal, longitudinal coupling between the first data qubit and the second data qubit within a predetermined time, so as to implement the two-qubit gate.

Optionally, the signal controller includes: a scanner and an adjuster. The scanner is configured to scan other coupling between the first data qubit and the second data qubit to obtain other coupling results, where the other coupling is coupling other than the longitudinal coupling. The adjuster is configured to activate, by means of adjusting the coupling control signal based on the other coupling results, the longitudinal coupling between the first data qubit and the second data qubit within the predetermined time, and control the other coupling between the first data qubit and the second data qubit to be minimum, so as to implement the two-qubit gate.

Optionally, a structure formed by a first Fluxonium qubit, a second Fluxonium qubit, and the adjustable coupler includes: a single-loop inductively coupled Fluxonium structure. The adjustable coupler in the single-loop inductively coupled Fluxonium structure is a third Fluxonium qubit.

Optionally, in the single-loop inductively coupled Fluxonium structure, the inductance of the first Fluxonium qubit is the inductance obtained by connecting a first inductor and a second inductor in series; the inductance of the second Fluxonium qubit is the inductance obtained by connecting a third inductor and a fourth inductor in series; and the inductance of the third Fluxonium qubit is the inductance obtained by connecting the second inductor, a fifth inductor, and the fourth inductor in series.

Optionally, the structure formed by the first Fluxonium qubit, the second Fluxonium qubit, and the adjustable coupler includes: a grounded double-loop SQUID structure. The adjustable coupler in the grounded double-loop SQUID structure includes a first grounded loop and a second grounded loop.

Optionally, in the grounded dual-loop SQUID structure, the inductance of the first Fluxonium qubit is the inductance obtained by connecting the first inductor and the second inductor in series, where one end of the second inductor is connected to the first inductor while the other end thereof is grounded; the inductance of the second Fluxonium qubit is the inductance obtained by connecting the third inductor and the fourth inductor in series, where one end of the fourth inductor is connected to the third inductor while the other end thereof is grounded; the first grounded loop is obtained by connecting the fifth inductor, the second inductor, and a Josephson junction in series, one end of the Josephson junction is connected to the fifth inductor while the other end thereof is grounded; and the second grounded loop is obtained by connecting a sixth inductor, the fourth inductor, and the Josephson junction in series, the Josephson junction is connected to one end of the fifth inductor and the sixth inductor while the other end thereof is grounded.

Optionally, the structure formed by the first Fluxonium qubit, the second Fluxonium qubit, and the adjustable coupler includes: a suspended single-loop SQUID structure. The adjustable coupler in the suspended single-loop SQUID structure is a single-loop SQUID.

Optionally, in the suspended single-loop SQUID structure, the inductance of the first Fluxonium qubit is the inductance obtained by connecting the first inductor and the second inductor in series; the inductance of the second Fluxonium qubit is the inductance obtained by connecting the third inductor and the fourth inductor in series; and the inductance of the single-loop SQUID is the inductance obtained by connecting the second inductor and the fourth inductor in series.

Optionally, the two-qubit gate is a controlled phase CZ gate.

According to another aspect of the embodiments of the present disclosure, a quantum device is further provided, which includes: any above circuit for implementing the two-qubit gate, the circuit being configured to perform a logic gate operation on a target data qubit to be processed in the quantum device.

Optionally, the target data qubit includes a Fluxonium qubit.

According to another aspect of the embodiments of the present disclosure, a quantum chip is further provided, which includes: any above circuit for implementing the two-qubit gate, the circuit being configured to perform a logic gate operation on a target data qubit to be processed in the quantum chip.

According to another aspect of the embodiments of the present disclosure, a quantum memory is further provided. The quantum memory stores a data qubit, and the data qubit is obtained by performing a logic gate operation based on any above circuit for implementing the two-qubit gate.

According to another aspect of the embodiments of the present disclosure, a quantum computer is provided, which includes: a quantum memory, a classical memory, and a quantum chip. The quantum memory stores a data qubit. The classical memory stores a program executable by the quantum chip. The quantum chip is configured to read the data qubit from the quantum memory, perform a logic gate operation on the read data qubit to obtain a target qubit, and write the target qubit into the quantum memory. The quantum chip is further configured to run the program stored in the classical memory, thereby implementing any above method for implementing the two-qubit gate.

According to still another aspect of the embodiments of the present disclosure, a quantum computer is provided, which includes: a classical memory and a quantum chip. The classical memory stores a program executable by the quantum chip. The quantum chip is configured to run the program stored in the classical memory, thereby implementing any above method for implementing the two-qubit gate.

In the embodiments of the present disclosure, the two-qubit gate is implemented based on the longitudinal coupling between the first data qubit and the second data qubit, and other types of coupling may cause a calculation error of the two-qubit gate. Therefore, it is necessary to retain the longitudinal coupling between the first data qubit and the second data qubit as much as possible, and make the coupling other than the longitudinal coupling as small as possible. In this implementation, by means of adjusting the coupling control signal applied to the adjustable coupler, the longitudinal coupling between the first data qubit and the second data qubit is activated within the predetermined time, so as to achieve the above desired effect and achieve the purpose of implementing a high-precision two-qubit gate, thereby achieving the technical effect of improving the computational accuracy of the two-qubit gate, and further solving the technical problem in the related art of low precision of the two-qubit gate.

## Brief Description of the Drawings

The drawings described herein are used to provide a further understanding of the present disclosure, and constitute a part of the present disclosure, and the exemplary embodiments of the present disclosure and the description thereof are used to explain the present disclosure, but do not constitute improper limitations to the present disclosure. In the drawings:

Fig. 1 is a flowchart of a method for implementing a two-qubit gate according to an embodiment of the present disclosure.

Fig. 2 is a schematic diagram of a single-loop inductively coupled Fluxonium structure according to an optional implementation of the present disclosure.

Fig. 3a is a schematic diagram of an energy band structure of an idle point and a working point of a Fluxonium coupler according to an optional implementation of the present disclosure.

Fig. 3b is a schematic diagram of an energy band structure of an idle point and a working point of a Fluxonium coupler according to another optional implementation of the present disclosure.

Fig. 4 is a schematic diagram of error decomposition of a single-loop inductively coupled Fluxonium structure according to an optional implementation of the present disclosure.

Fig. 5 is a schematic diagram of a grounded dual-loop SQUID structure according to an optional implementation of the present disclosure.

Fig. 6 is a schematic diagram of error decomposition of a grounded dual-loop SQUID structure according to an optional implementation of the present disclosure.

Fig. 7 is a schematic diagram of a suspended single-loop SQUID structure according to an optional implementation of the present disclosure.

Fig. 8 is a schematic diagram of effective coupling between two data qubits in a suspended single-loop SQUID structure according to an optional implementation of the present disclosure.

Fig. 9 is a schematic diagram of error decomposition of a suspended single-loop SQUID structure according to an optional implementation of the present disclosure.

Fig. 10 is a schematic diagram of a circuit for implementing a two-qubit gate according to an embodiment of the present disclosure.

Fig. 11 is a structural block diagram of a quantum computer according to an embodiment of the present disclosure.

**Detailed Description of the Embodiments**

In order to make the solutions of the present disclosure understood by those skilled in the art, the technical solutions in the embodiments of the present disclosure will be clearly and completely described below in combination with the drawings in the embodiments of the present disclosure. It is apparent that the described embodiments are not all embodiments but only part of embodiments of the present disclosure. All other embodiments obtained by those of ordinary skill in the art on the basis of the embodiments in the present disclosure without creative work shall fall within the scope of protection of the present disclosure.

It is to be noted that terms "first", "second" and the like in the description, claims and the above drawings of the present disclosure are used for distinguishing similar objects rather than describing a specific sequence or a precedence order. It should be understood that the data used in such a way may be exchanged where appropriate, in order that the embodiments of the present disclosure described here may be implemented in an order other than those illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

First, some nouns or terms appearing in the description of the embodiments of the present disclosure are applicable to the following explanations.

Quantum coherence refers to a state in which different states in a quantum system maintain a definable phase relationship. Quantum coherence is a necessary condition for ensuring that quantum computing is performed correctly.

Qubit: in a classical mechanics system, the state of a bit is unique, while quantum mechanics allows the qubit to be a superposition of two states at the same time, which is the basic property of quantum computing. Physically speaking, the qubit is a quantum state, so that the qubit has the properties of the quantum state. Due to the unique quantum properties of the quantum state, the qubit has many characteristics that are different from a classical bit, which is one of the basic characteristics of quantum information science.

Quantum chip: the so-called quantum chip is to integrate quantum circuits on a substrate, and then carry the function of quantum information processing.

Fluxonium (flux), a superconducting qubit type, consists of a Josephson junction, an inductor, and a capacitor connected in parallel.

Superconducting qubit gate: quantum logic may be completed by a set of single-qubit and two-qubit gates, where a two-qubit logic gate takes two qubits as input, usually the first qubit is a control bit and the second is a target bit, common examples are a controlled NOT gate (CNOT gate) and a controlled phase gate (CZ gate or CPHASE gate). A set of universal single-qubit and two-qubit gates is sufficient to implement an arbitrary quantum logic, and at the same time, each single-qubit gate and each two-qubit gate are reversible, that is, given an output state, an input state may be uniquely determined.

SOUID is an extremely sensitive instrument that can measure weak magnetic signals. In terms of its function, SOUID is a flux sensor that may be configured not only to measure changes in flux, but also to measure other physical quantities that can be converted into flux, such as voltage, current, resistance, inductance, magnetic induction intensity, magnetic field gradient, magnetic susceptibility, etc.

Embodiment 1

According to the embodiments of the present disclosure, a method embodiment for implementing a two-qubit gate is further provided. It is to be noted that the steps shown in the flowchart of the accompanying drawings may be executed in a computer system, such as a set of computer-executable instructions, and although a logical sequence is shown in the flowchart, in some cases, the steps shown or described may be executed in a different order than here.

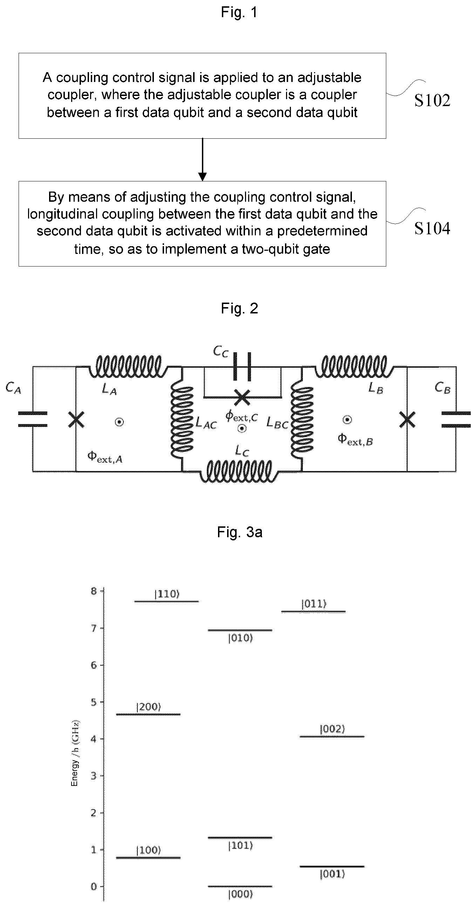

The present disclosure provides a method for implementing a two-qubit gate as shown in Fig. 1. Fig. 1 is a flowchart of a method for implementing a two-qubit gate according to an embodiment of the present disclosure. As shown in Fig. 1, the method includes the following steps.

At S102, a coupling control signal is applied to an adjustable coupler, where the adjustable coupler is a coupler between a first data qubit and a second data qubit.

At S104, by means of adjusting the coupling control signal, longitudinal coupling between the first data qubit and the second data qubit is activated within a predetermined time, so as to implement the two-qubit gate.

Through the above steps, the two-qubit gate is implemented based on the longitudinal coupling between the first data qubit and the second data qubit, and other types of coupling may cause a calculation error of the two-qubit gate. Therefore, it is necessary to retain the longitudinal coupling between the first data qubit and the second data qubit as much as possible, and make the coupling other than the longitudinal coupling as small as possible. In this implementation, by means of adjusting the coupling control signal applied to the adjustable coupler, the longitudinal coupling between the first data qubit and the second data qubit is activated within the predetermined time, so as to achieve the above desired effect and achieve the purpose of implementing a high-precision two-qubit gate, thereby achieving the technical effect of improving the computational accuracy of the two-qubit gate, and further solving the technical problem in the related art of low precision of the two-qubit gate.

As an optional embodiment, the operation of activating, by means of adjusting the coupling control signal, longitudinal coupling between the first data qubit and the second data qubit within a predetermined time, so as to implement the two-qubit gate includes: activating, by means of adjusting the coupling control signal, the longitudinal coupling between the first data qubit and the second data qubit within the predetermined time, and controlling other coupling between the first data qubit and the second data qubit to be minimum, so as to implement the two-qubit gate, where the other coupling is coupling other than the longitudinal coupling. In this embodiment, in order to implement the two-qubit gate based on a Fluxonium qubit by inductive coupling, it is necessary to use the longitudinal coupling in inductive coupling, while other types of coupling may be superimposed on the longitudinal coupling, resulting in errors, thereby reducing the computational accuracy of the two-qubit gate. Therefore, in this embodiment, by means of adjusting the coupling control signal, the coupling between the first data qubit and the second data qubit is controlled to reach the required state, that is, the longitudinal coupling is maximum and other types of coupling other than the longitudinal coupling are minimum.

As an optional embodiment, the coupling between the data qubits includes transverse coupling and longitudinal coupling, where the transverse coupling and the longitudinal coupling are described based on a quantization axis of the qubit. The direction of the quantization axis is a direction between a 0 state and a 1 state of the qubit, called a Z axis, and the two-dimensional plane perpendicular to the quantization axis is composed of an X axis and a Y axis. The coupling associated with the Z axis is the longitudinal coupling, and the coupling associated with the X and Y axes is the transverse coupling.

As an optional embodiment, the operation of activating, by means of adjusting the coupling control signal, the longitudinal coupling between the first data qubit and the second data qubit within the predetermined time, and controlling other coupling between the first data qubit and the second data qubit to be minimum includes: determining a target adjustment parameter of the coupling control signal, where the target adjustment parameter includes at least one of the following: an amplitude of the coupling control signal and a period of the coupling control signal; obtaining an adjusted coupling control signal by means of adjusting the target adjustment parameter of the coupling control signal; and activating, by means of applying the adjusted coupling control signal to the adjustable coupler, the longitudinal coupling between the first data qubit and the second data qubit within the predetermined time, and controlling the other coupling between the first data qubit and the second data qubit to be minimum. Due to the characteristic that other types of coupling other than the longitudinal coupling may rotate periodically with the phase change of the control signal, the coupling control signal may be adjusted by the target adjustment parameters of the coupling control signal, i.e., the amplitude and the period, after the signal waveform of the coupling control signal is determined, so that the other types of coupling are eliminated with the phase rotation, thereby achieving the effect of only retaining the longitudinal coupling.

As an optional embodiment, the operation of determining a target adjustment parameter of the coupling control signal includes: determining multiple coupling items included in the other coupling; respectively determining candidate adjustment parameters corresponding to the coupling control signal when the multiple coupling items are minimal; and determining, based on a predetermined optimization method and the candidate adjustment parameters, the target adjustment parameter of the coupling control signal when the multiple coupling items are simultaneously minimal. In order to make other types of coupling minimal under the control of the coupling control signal, the other types of coupling include multiple coupling items, that is, the adjustment parameter of the coupling control signal may be adjusted multiple times to obtain multiple candidate adjustment parameters, and the candidate adjustment parameter that may make the multiple coupling items minimum simultaneously is selected from the multiple candidate adjustment parameters and determined as the target adjustment parameter, so as to ensure that when the coupling control signal is controlled by the target adjustment parameter to implement the dual-qubit gate, the coupling other than the longitudinal coupling between the first data qubit and the second data qubit is minimum, that is, the calculation error of the dual-qubit gate in this state is minimal.

As an optional embodiment, when the target adjustment parameter of the coupling control signal when the multiple coupling items are simultaneously minimal is determined based on the predetermined optimization method and the candidate adjustment parameters, the predetermined optimization method may include multiple methods, for example, constructing an optimization function under the condition that multiple coupling terms are simultaneously minimal, and obtaining the target adjustment parameter of the coupling control signal by solving the optimization function. It is to be noted that when the optimization function is solved, the target adjustment parameter is obtained in various manners, for example, by programming and computer optimization.

As an optional embodiment, the first data qubit is a first Fluxonium qubit, and the second data qubit is a second Fluxonium qubit. The Fluxonium qubit has the characteristics of long coherence time and flexible operation. By using the Fluxonium qubit as the first data qubit and the second data qubit in the above solution, the above characteristics of long coherence time and flexible operation of the Fluxonium qubit may be brought into play in the quantum computation of the two-qubit gate, so that the two-qubit gate achieves the computational effect of high-precision quantum computation.

As an optional embodiment, after the first data qubit, the second data qubit, and the adjustable coupler are connected, a structure formed includes at least one of the following: a single-loop inductively coupled Fluxonium structure, a grounded dual-loop SQUID structure, and a suspended single-loop SQUID structure.

As an optional embodiment, before applying the coupling control signal to the adjustable coupler, the method further includes: in a case where the structure formed by the first data qubit, the second data qubit, and the adjustable coupler is the single-loop inductively coupled Fluxonium structure or the grounded double-loop SQUID structure, adjusting the first data qubit and the second data qubit to be in a flux sweet spot state, and adjusting the external magnetic flux of the adjustable coupler to be a minimum value; and in a case where the structure formed by the first data qubit, the second data qubit, and the adjustable coupler is the suspended single-loop SQUID structure, adjusting the first data qubit and the second data qubit to be in a mobile sweet spot state, so that the longitudinal action of a quantum data bit of the adjustable coupler is a minimum value, where the flux sweet spot state is that the decoherence time of the data qubit reaches a maximum value, and the mobile sweet spot state is the flux sweet spot state corresponding to the offset movement of the adjustable coupler. In order to make the different structures formed by the first data qubit, the second data qubit, and the adjustable coupler achieve better precision respectively, the first data qubit and the second data qubit may be adjusted to respective suitable states for different structures. For example, for the single-loop inductively coupled Fluxonium structure or the grounded dual-loop SQUID structure, the first data qubit and the second data qubit may be adjusted to be in the flux sweet spot state, and the external magnetic flux of the adjustable coupler is adjusted to be the minimum value. However, for the suspended single-loop SQUID structure, the structure does not achieve good computational accuracy when the first data qubit and the second data qubit are adjusted to be in the flux sweet spot state. Therefore, the first data qubit and the second data qubit are adjusted to be in the mobile sweet spot state, and the longitudinal action of the quantum data bit of the adjustable coupler is minimum.

As an optional embodiment, the coupling control signal is a hyperbolic tangent pulse signal. There are many options for the control signal, and in this embodiment, the hyperbolic tangent pulse is only used as one optional pulse signal for illustration.

Based on the above embodiments and optional embodiments, the present disclosure provides an optional implementation, which is described below.

Since adjusting a direct coupling device may interfere with the coupling between other adjacent devices, the adjustable coupler may be used to implement the dual-qubit gate based on a superconducting device. At the same time, when the adjustable coupler is adjusted, all data qubits may be in the flux sweet spot state, and the data qubits in the flux sweet spot state may also maintain longer coherence time than in a direct coupling state.

The optional implementation of the present disclosure provides three manners of implementing the dual-qubit gate based on the adjustable coupler, which are introduced below.

(1) Single-loop inductively coupled Fluxonium structure

Fig. 2 is a schematic diagram of a single-loop inductively coupled Fluxonium structure according to an optional implementation of the present disclosure. As shown in Fig. 2, when the Fluxonium qubit is coupled with two other Fluxonium qubits through inductive coupling, the Fluxonium qubit may be used as the adjustable coupler for the other two Fluxonium qubits.

Hamiltonian under this structure is calculated as follows:

$$
\begin{aligned}
h &= h_A + h_B + h_C + h_{AB} + h_{AC} + h_{BC} \\
&= \sum_{\substack{i=A,B \\ A,B,C}} \left[ 4E_{C,i} n_i^2 - E_{J,i}\cos\varphi_i + \frac{1}{2}E_{L,i}\left(\varphi_i + \phi_{ext,i}\right)^2 \right] \\
&\quad - \sum_{i \neq j} J_{L,ij}\left(\varphi_i - \phi_{ext,i}\right)\left(\varphi_j - \phi_{ext,j}\right)
\end{aligned}
$$

Where A and B are the data qubits, C is the adjustable coupler, n represents the charge, $\varphi$ represents the phase, $E_C$ is the energy of the capacitor, $E_J$ is the energy of the Josephson junction, $E_L$ is the energy of the inductor, $\varphi_{ext}$ is the external magnetic flux, and $J_{L,ij}$ is the coupling energy between the inductors.

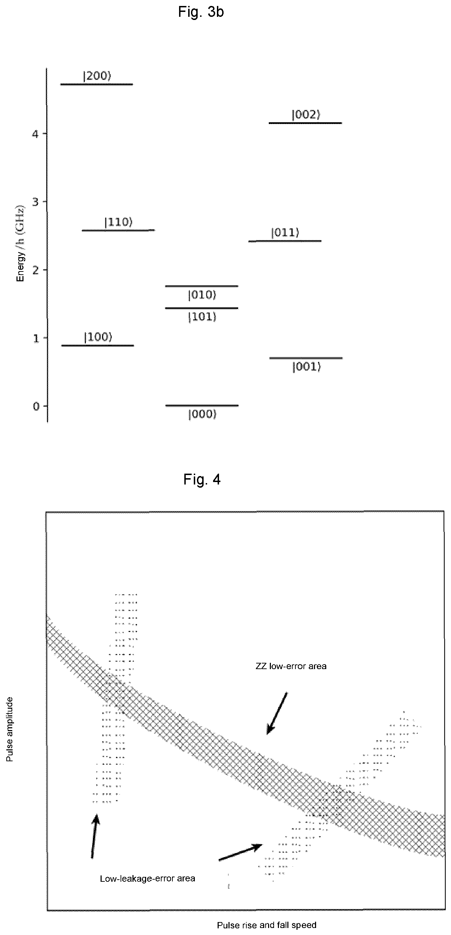

Fig. 3a is a schematic diagram of an energy band structure of an idle point and a working point of a Fluxonium coupler according to an optional implementation of the present disclosure. Fig. 3b is a schematic diagram of an energy band structure of an idle point and a working point of a Fluxonium coupler according to another optional implementation of the present disclosure. As shown in Fig. 3a and Fig. 3b, when the adjustable coupler is at $\phi_{ext}$=0, the frequency band of the coupler |1> is much higher than that of the data qubit |11>, and the interaction between them does not produce obvious longitudinal coupling. When the adjustable coupler is placed at the working point, the coupler |1> is close to the data qubit | 11>, and the interaction between them may cause the energy level of the data qubit |11> to move, thereby generating a large amount of longitudinal coupling, which may be configured to implement the dual-qubit gate. Therefore, the movement of the coupler between the idle point and the working point may be adjusted by applying a pulse signal to the adjustable coupler.

The two-qubit gate implemented by the above single-loop inductively coupled Fluxonium structure is mainly affected by the state leakage during the energy level transition from the data qubit |11> to the coupler |1>. It may be determined through digital simulation that an error term generated thereby may rotate rapidly with the phase, and the error term may be reduced by adjusting the waveform and period of the pulse. Fig. 4 is a schematic diagram of error decomposition of a single-loop inductively coupled Fluxonium structure according to an optional implementation of the present disclosure. As shown in Fig. 4, when the longitudinal error and the error caused by state leakage are both minimum, a state with higher precision of the two-qubit gate may be determined. Although other error terms exist, the effects are small. After optimization, the minimum coherence error is about $2\times10^{-4}$.

(2) Grounded dual-loop SQUID structure

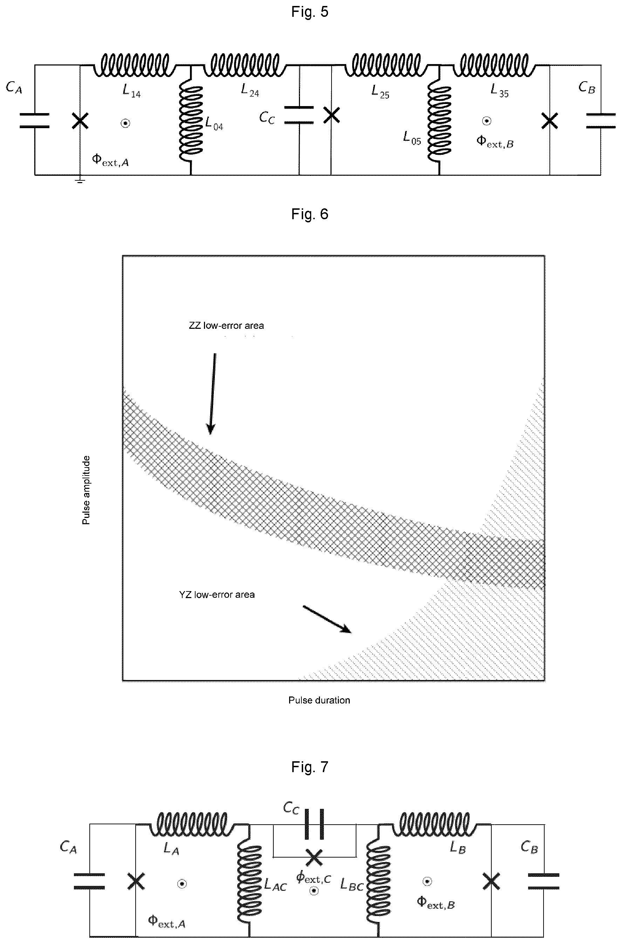

Fig. 5 is a schematic diagram of a grounded dual-loop SQUID structure according to an optional implementation of the present disclosure. As shown in Fig. 5, the SQUID may also be used as the adjustable coupler, and a Hamiltonian calculation formula thereof is the same as that of the above Fluxonium coupler. The difference between the SQUID coupler and the Fluxonium coupler is that the capacitance in the SQUID is entirely derived from the capacitance of the Josephson junction, so that its frequency is very high ($\omega_c$>10 z) and the coupling between the SQUID and the data qubit is very strong, resulting in a significant deviation of the transverse coupling at the idle point, thereby weakening the gate operation of a single data qubit, which may be improved by using a grounded SQUID to turn off the direct coupling between the data qubits.

The pulse signal applied to the adjustable coupler may move the coupler between the idle point and the working point to accumulate the longitudinal coupling. Fig. 6 is a schematic diagram of error decomposition of a grounded dual-loop SQUID structure according to an optional implementation of the present disclosure. As shown in Fig. 6, the effects of other types of coupling remaining other than the longitudinal coupling after optimization are better, and the coherence error in a better state may be as low as $1\times10^{-4}$.

(3) Suspended single-loop SQUID structure

Fig. 7 is a schematic diagram of a suspended single-loop SQUID structure according to an optional implementation of the present disclosure. As shown in Fig. 7, in the suspended single-loop SQUID structure, directly applying the pulse signal to the SQUID coupler does not have a good effect. Therefore, in the suspended single-loop SQUID structure, the SQUID coupler is adjusted by reselecting the idle point. In this structure, the effective coupling between two data qubits may be expressed as follows:

$$H_{eff} = -\frac{J_L^{AC} J_L^{BC}}{E_{L,C}} \left( \frac{\delta\langle 0|\varphi_B|0\rangle}{\delta\phi_{ext,C}} + 1 \right)$$

Where H is the Hamiltonian, $\varphi$ represents the phase, $E_C$ is the energy of the capacitor, $E_J$ is the energy of the Josephson junction, $E_L$ is the energy of the inductor, and $\phi_{ext}$ is the external magnetic flux, $J_L^{AC}$ is the coupling energy between AC, $J_L^{BC}$ is the coupling energy between AB.

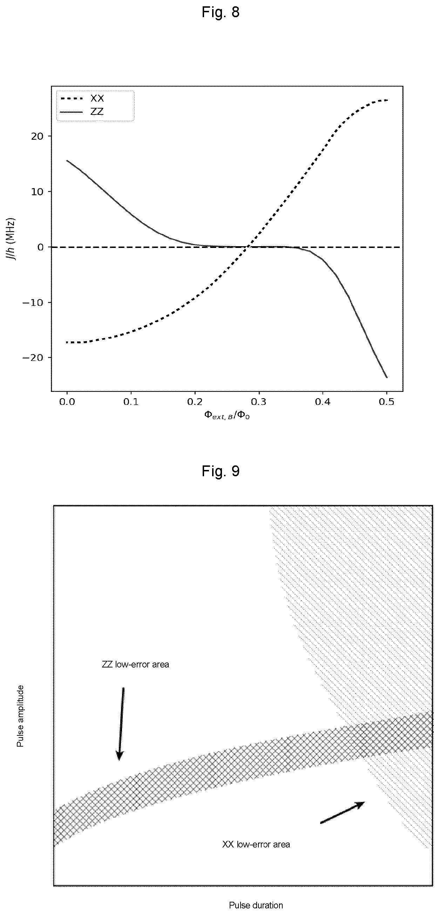

Fig. 8 is a schematic diagram of effective coupling between two data qubits in a suspended single-loop SQUID structure according to an optional implementation of the present disclosure. As shown in Fig. 8, there are some points where the effective coupling between the two data qubits is close to zero, and at a point where both the transverse coupling and the longitudinal coupling are close to zero, the point may be determined as the idle point to make the single qubit gate achieve high precision.

At the same time, the two-qubit gate may be implemented by applying the pulse signal to the SQUID coupler to generate the longitudinal coupling. Fig. 9 is a schematic diagram of error decomposition of a suspended single-loop SQUID structure according to an optional implementation of the present disclosure. As shown in Fig. 9, at this time, the largest error term comes from the transverse coupling. From Fig. 9, it may be seen that there are some paths with only small longitudinal coupling errors and transverse coupling errors. At the intersection of the two paths, a high-precision two-qubit gate may be determined, and the coherence error thereof is $2 \times 10^{-4}$.

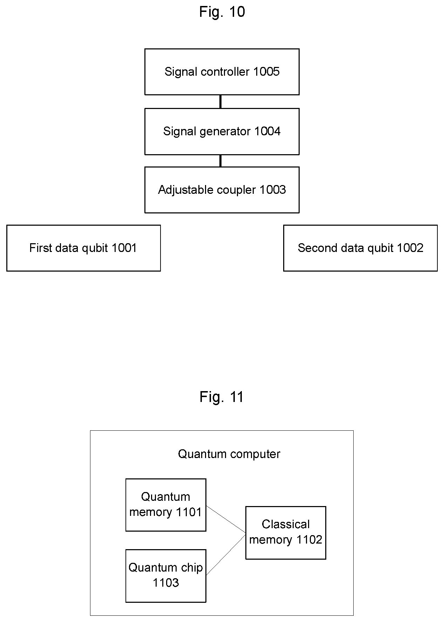

According to the embodiments of the present disclosure, a circuit for implementing the above method for implementing the two-qubit gate is further provided. Fig. 10 is a schematic diagram of a circuit for implementing a two-qubit gate according to an embodiment of the present disclosure. As shown in Fig. 10, the circuit includes: a first data qubit 1001, a second data qubit 1002, an adjustable coupler 1003 between the first data qubit and the second data qubit, a signal generator 1004, and a signal controller 1005. The signal generator 1004 is configured to generate a coupling control signal and apply the coupling control signal to the adjustable coupler. The signal controller 1005 is configured to activate, by means of controlling the signal generator to adjust the coupling control signal, longitudinal coupling between the first data qubit and the second data qubit within a predetermined time, so as to implement the two-qubit gate.

As an optional embodiment, the signal controller includes: a scanner and an adjuster. The scanner is configured to scan other coupling between the first data qubit and the second data qubit to obtain other coupling results, where the other coupling is coupling other than the longitudinal coupling. The adjuster is configured to activate, by means of adjusting the coupling control signal, the longitudinal coupling between the first data qubit and the second data qubit within the predetermined time, and control the other coupling between the first data qubit and the second data qubit to be minimum based on the other coupling results, so as to implement the two-qubit gate.

As an optional embodiment, the coupling control signal is a hyperbolic tangent pulse signal.

As an optional embodiment, the first data qubit is a first Fluxonium qubit, and the second data qubit is a second Fluxonium qubit.

As an optional embodiment, a structure formed by a first Fluxonium qubit, a second Fluxonium qubit, and the adjustable coupler includes: a single-loop inductively coupled Fluxonium structure. The adjustable coupler in the single-loop inductively coupled Fluxonium structure is a third Fluxonium qubit.

As an optional embodiment, in the single-loop inductively coupled Fluxonium structure, the inductance of the first Fluxonium qubit is the inductance obtained by connecting a first inductor and a second inductor in series; the inductance of the second Fluxonium qubit is the inductance obtained by connecting a third inductor and a fourth inductor in series; and the inductance of the third Fluxonium qubit is the inductance obtained by connecting the second inductor, a fifth inductor, and the fourth inductor in series.

As an optional embodiment, the structure formed by the first Fluxonium qubit, the second Fluxonium qubit, and the adjustable coupler includes: a grounded double-loop SQUID structure. The adjustable coupler in the grounded double-loop SQUID structure includes a first grounded loop and a second grounded loop.

As an optional embodiment, in the grounded dual-loop SQUID structure, the inductance of the first Fluxonium qubit is the inductance obtained by connecting the first inductor and the second inductor in series, where one end of the second inductor is connected to the first inductor while the other end thererof is grounded; the inductance of the second Fluxonium qubit is the inductance obtained by connecting the third inductor and the fourth inductor in series, where one end of the fourth inductor is connected to the third inductor while the other end thereof is grounded; the first grounded loop is obtained by connecting the fifth inductor, the second inductor, and a Josephson junction in series, and one end of the Josephson junction is connected to the fifth inductor while the other end thereof is grounded; and the second grounded loop is obtained by connecting a sixth inductor, the fourth inductor, and the Josephson junction in series, and the Josephson junction is connected to one end of the fifth inductor and the sixth inductor while the other end thereof is grounded.

As an optional embodiment, the structure formed by the first Fluxonium qubit, the second Fluxonium qubit, and the adjustable coupler includes: a suspended single-loop SQUID structure. The adjustable coupler in the suspended single-loop SQUID structure is a single-loop SQUID.

As an optional embodiment, in the suspended single-loop SQUID structure, the inductance of the first Fluxonium qubit is the inductance obtained by connecting the first inductor and the second inductor in series; the inductance of the second Fluxonium qubit is the inductance obtained by connecting the third inductor and the fourth inductor in series; and the inductance of the single-loop SQUID is the inductance obtained by connecting the second inductor and the fourth inductor in series.

As an optional embodiment, the two-qubit gate is a controlled phase CZ gate.

According to the embodiments of the present disclosure, a quantum device is further provided, which includes: any above circuit for implementing the two-qubit gate, the circuit being configured to perform a logic gate operation on a target data qubit to be processed in the quantum device.

As an optional embodiment, the target data qubit includes a Fluxonium qubit.

According to the embodiments of the present disclosure, a quantum chip is further provided, which includes: any above circuit for implementing the two-qubit gate, the circuit being configured to perform a logic gate operation on a target data qubit to be processed in the quantum chip.

As an optional embodiment, the target data qubit includes a Fluxonium qubit.

According to the embodiments of the present disclosure, a quantum memory is further provided. The quantum memory stores a data qubit, and the data qubit is obtained by performing a logic gate operation based on any above circuit for implementing the two-qubit gate.

The embodiments of the present disclosure may further provide a quantum computer, which may be any quantum computer device in a quantum computer group.

Optionally, Fig. 11 is a structural block diagram of a quantum computer according to an embodiment of the present disclosure. As shown in Fig. 11, the quantum computer may include: a quantum memory 1101, a classical memory 1102, and a quantum chip 1103. The quantum memory stores a data qubit. The classical memory stores a program executable by the quantum chip. The quantum chip is configured to read the data qubit from the quantum memory, perform a logic gate operation on the read data qubit to obtain a target qubit, and write the target qubit into the quantum memory. The quantum chip is further configured to run the program stored in the classical memory, thereby implementing any above method for implementing the two-qubit gate. It is to be noted that the classical memory referred to above is relative to the quantum memory, that is, the memory usually referred to.

Optionally, the embodiments of the present disclosure further provide another quantum computer, which may include: a classical memory and a quantum chip.

The classical memory stores a program executable by the quantum chip. The quantum chip is configured to run the program stored in the classical memory, thereby implementing any above method for implementing the two-qubit gate.

By adopting the embodiments of the present disclosure, the two-qubit gate is implemented based on the longitudinal coupling between the first data qubit and the second data qubit, and other types of coupling may cause a calculation error of the two-qubit gate. Therefore, it is necessary to retain the longitudinal coupling between the first data qubit and the second data qubit as much as possible, and make the coupling other than the longitudinal coupling as small as possible. In this implementation, by means of adjusting the coupling control signal applied to the adjustable coupler, the longitudinal coupling between the first data qubit and the second data qubit is activated within the predetermined time, so as to achieve the above desired effect and achieve the purpose of implementing a high-precision two-qubit gate, thereby achieving the technical effect of improving the computational accuracy of the two-qubit gate, and further solving the technical problem in the related art of low precision of the two-qubit gate.

Those of ordinary skill in the art may understand that the structure shown in Fig. 11 is only schematic and not intended to limit the above structure. For example, the quantum computer may further include more or fewer components than shown in Fig. 11, or has a different configuration from that shown in Fig. 11.

Those of ordinary skill in the art should know that all or part of the steps in various methods of the above embodiment may be implemented by terminal device related hardware instructed through a program, the program may be stored in a computer-readable storage medium, and the storage program may include: a flash disk, a Read-Only Memory (ROM), a Random Access Memory (RAM), a magnetic disk or a compact disc.

In the several embodiments provided in the present disclosure, it should be understood that, the disclosed technical content may be implemented in other ways. The apparatus embodiments described above are merely illustrative. For example, the division of the units is merely a logical function division, and there may be other divisions in actual implementation. For example, a plurality of units or components may be combined or integrated into another system, or some features can be ignored, or not implemented. In addition, the displayed or discussed mutual coupling or direct coupling or communication connection may be indirect coupling or communication connection through some interfaces, units or modules, and may be in electrical or other forms. The units described as separate components may or may not be physically separated.

The units described as separate components may or may not be physically separated. The components displayed as units may or may not be physical units, that is, the components may be located in one place, or may be distributed on the plurality of network units. Part or all of the units may be selected according to actual requirements to achieve the purposes of the solutions of this embodiment.

In addition, the functional units in the various embodiments of the present disclosure may be integrated into one processing unit, or each unit may exist alone physically, or two or more than two units may be integrated into one unit. The above integrated unit may be implemented in the form of hardware, or may be implemented in the form of a software functional unit.

When being implemented in form of software functional unit and sold or used as an independent product, the integrated unit may be stored in a computer-readable storage medium. Based on this understanding, the technical solutions of the present disclosure essentially or the parts that contribute to the prior art, or all or part of the technical solutions may be embodied in the form of a software product. The computer software product is stored in a storage medium, including a plurality of instructions for causing a computer device (which may be a personal computer, a server, or a network device, and the like) to execute all or part of the steps the method described in the various embodiments of the present disclosure. The foregoing storage medium includes a USB flash disk, an ROM, an RAM, and various media that may store program codes, such as a mobile hard disk, a magnetic disk, or an optical disk.

The above description is merely preferred implementations of the present disclosure, and it is to be noted that those of ordinary skill in the art may also make several improvements and refinements without departing from the principle of the present disclosure, and it should be considered that these improvements and refinements shall all fall within the scope of protection of the present disclosure.

**Claims**

1. A method for implementing a two-qubit gate, comprising:

   applying a coupling control signal to an adjustable coupler, wherein the adjustable coupler is a coupler between a first data qubit and a second data qubit; and
   activating, by means of adjusting the coupling control signal, longitudinal coupling between the first data qubit and the second data qubit within a predetermined time, so as to implement the two-qubit gate.

2. The method as claimed in claim 1, wherein the activating, by means of adjusting the coupling control signal, longitudinal coupling between the first data qubit and the second data qubit within a predetermined time, so as to implement the two-qubit gate comprises:
   activating, by means of adjusting the coupling control signal, the longitudinal coupling between the first data qubit and the second data qubit within the predetermined time, and controlling other coupling between the first data qubit and the second data qubit to be minimum, so as to implement the two-qubit gate, wherein the other coupling is coupling other than the longitudinal coupling.

3. The method as claimed in claim 1, wherein the activating, by means of adjusting the coupling control signal, the longitudinal coupling between the first data qubit and the second data qubit within the predetermined time, and controlling other coupling between the first data qubit and the second data qubit to be minimum comprises:

   determining a target adjustment parameter of the coupling control signal, wherein the target adjustment parameter comprises at least one of the following: an amplitude of the coupling control signal and a period of the coupling control signal;
   obtaining an adjusted coupling control signal by means of adjusting the target adjustment parameter of the coupling control signal; and
   activating, by means of applying the adjusted coupling control signal to the adjustable coupler, the longitudinal coupling between the first data qubit and the second data qubit within the predetermined time, and controlling the other coupling between the first data qubit and the second data qubit to be minimum.

4. The method as claimed in claim 3, wherein the determining a target adjustment parameter of the coupling control signal comprises:

   determining multiple coupling items comprised in the other coupling;
   respectively determining candidate adjustment parameters corresponding to the coupling control signal when the multiple coupling items are minimal; and
   determining, based on a predetermined optimization method and the candidate adjustment parameters, the target adjustment parameter of the coupling control signal when the multiple coupling items are simultaneously minimal.

5. The method as claimed in claim 1, wherein the first data qubit is a first Fluxonium qubit, and the second data qubit is a second Fluxonium qubit.

6. A circuit for implementing a two-qubit gate, comprising: a first data qubit, a second data qubit, an adjustable coupler between the first data qubit and the second data qubit, a signal generator, and a signal controller, wherein,

   the signal generator is configured to generate a coupling control signal and apply the coupling control signal to the adjustable coupler; and
   the signal controller is configured to activate, by means of controlling the signal generator to adjust the coupling control signal, longitudinal coupling between the first data qubit and the second data qubit within a predetermined time, so as to implement the two-qubit gate.

7. The circuit as claimed in claim 6, wherein the signal controller comprises: a scanner and an adjuster, wherein,

the scanner is configured to scan other coupling between the first data qubit and the second data qubit to obtain other coupling results, wherein the other coupling is coupling other than the longitudinal coupling; and
the adjuster is configured to activate, by means of adjusting the coupling control signal based on the other coupling results, the longitudinal coupling between the first data qubit and the second data qubit within the predetermined time, and control other coupling between the first data qubit and the second data qubit to be minimum, so as to implement the two-qubit gate.

8. The circuit as claimed in claim 6, wherein the first data qubit is a first Fluxonium qubit, and the second data qubit is a second Fluxonium qubit.

9. The circuit as claimed in claim 8, wherein a structure formed by a first Fluxonium qubit, a second Fluxonium qubit, and the adjustable coupler comprises: a single-loop inductively coupled Fluxonium structure, wherein the adjustable coupler in the single-loop inductively coupled Fluxonium structure is a third Fluxonium qubit.

10. The circuit as claimed in claim 9, wherein, in the single-loop inductively coupled Fluxonium structure,

an inductance of the first Fluxonium qubit is an inductance obtained by connecting a first inductor and a second inductor in series;
an inductance of the second Fluxonium qubit is an inductance obtained by connecting a third inductor and a fourth inductor in series; and
an inductance of the third Fluxonium qubit is an inductance obtained by connecting the second inductor, a fifth inductor, and the fourth inductor in series.

11. The circuit as claimed in claim 8, wherein a structure formed by the first Fluxonium qubit, the second Fluxonium qubit, and the adjustable coupler comprises: a grounded double-loop Superconducting Quantum Interference Device (SQUID) structure, wherein the adjustable coupler in the grounded double-loop SQUID structure comprises a first grounded loop and a second grounded loop.

12. The circuit as claimed in claim 11, wherein, in the grounded dual-loop SQUID structure,

an inductance of the first Fluxonium qubit is an inductance obtained by connecting a first inductor and a second inductor in series, wherein one end of the second inductor is connected to the first inductor while the other end thereof is grounded;
an inductance of the second Fluxonium qubit is an inductance obtained by connecting a third inductor and a fourth inductor in series, wherein one end of the fourth inductor is connected to the third inductor while the other end thereof is grounded;
the first grounded loop is obtained by connecting a fifth inductor, the second inductor, and a Josephson junction in series, and one end of the Josephson junction is connected to the fifth inductor while the other end thereof is grounded; and
the second grounded loop is obtained by connecting a sixth inductor, the fourth inductor, and the Josephson junction in series, and the Josephson junction is connected to one end of the fifth inductor and the sixth inductor while the other end thereof is grounded.

13. The circuit as claimed in claim 8, wherein a structure formed by the first Fluxonium qubit, the second Fluxonium qubit, and the adjustable coupler comprises: a suspended single-loop SQUID structure, wherein the adjustable coupler in the suspended single-loop SQUID structure is a single-loop SQUID.

14. The circuit as claimed in claim 13, wherein, in the grounded dual-loop SQUID structure,

an inductance of the first Fluxonium qubit is an inductance obtained by connecting a first inductor and a second inductor in series;
an inductance of the second Fluxonium qubit is an inductance obtained by connecting a third inductor and a fourth inductor in series; and
an inductance of the single-loop SQUID is an inductance obtained by connecting the second inductor and the fourth inductor in series.

Fig. 1

A coupling control signal is applied to an adjustable
coupler, where the adjustable coupler is a coupler
between a first data qubit and a second data qubit

S102

By means of adjusting the coupling control signal,
longitudinal coupling between the first data qubit and the
second data qubit is activated within a predetermined
time, so as to implement a two-qubit gate

S104

Fig. 2

Fig. 3a

Fig. 3b

Fig. 4

Fig. 5

Fig. 6

Fig. 7

Fig. 8

Fig. 9

Fig. 10

Signal controller 1005

Signal generator 1004

Adjustable coupler 1003

First data qubit 1001

Second data qubit 1002

Fig. 11

Quantum computer

Quantum memory 1101

Classical memory 1102

Quantum chip 1103

## INTERNATIONAL SEARCH REPORT

| International application No. |
| --- |
| **PCT/CN2023/108852** |

### A. CLASSIFICATION OF SUBJECT MATTER

G06N10/00(2022.01)i; G06N10/20(2022.01)i

According to International Patent Classification (IPC) or to both national classification and IPC

### B. FIELDS SEARCHED

Minimum documentation searched (classification system followed by classification symbols)

IPC:G06N10

Documentation searched other than minimum documentation to the extent that such documents are included in the fields searched

Electronic data base consulted during the international search (name of data base and, where practicable, search terms used)

CNTXT, WPABSC, ENTXTC, VEN, USTXT, CNKI, IEEE: 串联, 垂直, 磁通量, 磁通子, 单环路, 第二, 第一, 电感, 电路, 精度, 两比特门, 两量子比特门, 两量子位门, 两位门, 量子位, 竖向, 双比特门, 双量子比特门, 双量子位门, 双位门, 信号, 正交, 纵向, 耦合, 时间, 时段, 约瑟夫森结, 电容, fluxonium, SQUID, TWO QUBIT GATE?, Double quantum bit gate?, qubits, first, second, coupl+, longitudinal, vertical, perpendicular, orthogonality, loop, seri+, LC, circuit?, josephson, precision

### C. DOCUMENTS CONSIDERED TO BE RELEVANT

| Category* | Citation of document, with indication, where appropriate, of the relevant passages | Relevant to claim No. |
| --- | --- | --- |
| PX | CN 115271075 A (ALIBABA DAMO ACADEMY (HANGZHOU) TECHNOLOGY CO., LTD.) 01 November 2022 (2022-11-01)<br>claims 1-14 | 1-14 |
| X | CN 112368721 A (GOOGLE LLC) 12 February 2021 (2021-02-12)<br>description, paragraphs [0035]-[0065] | 1-14 |
| A | CN 112449704 A (GOOGLE LLC) 05 March 2021 (2021-03-05)<br>entire document | 1-14 |
| A | CN 109784493 A (UNIVERSITY OF SCIENCE AND TECHNOLOGY OF CHINA) 21 May 2019 (2019-05-21)<br>entire document | 1-14 |
| A | CN 111183432 A (INTERNATIONAL BUSINESS MACHINES CORP.) 19 May 2020 (2020-05-19)<br>entire document | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 September 2023** | **12 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/108852**

**C.    DOCUMENTS CONSIDERED TO BE RELEVANT**

| Category* | Citation of document, with indication, where appropriate, of the relevant passages | Relevant to claim No. |
|---|---|---|
| A | CN 114386609 A (GUANGDONG INSPUR SMART COMPUTING TECHNOLOGY CO., LTD.) 22 April 2022 (2022-04-22)<br>entire document | 1-14 |
| A | CN 114429215 A (UNIVERSITY OF SCIENCE AND TECHNOLOGY OF CHINA) 03 May 2022 (2022-05-03)<br>entire document | 1-14 |
| A | CN 114450697 A (GOOGLE LLC) 06 May 2022 (2022-05-06)<br>entire document | 1-14 |
| A | US 2022190027 A1 (IQM FINLAND OY) 16 June 2022 (2022-06-16)<br>entire document | 1-14 |

Form PCT/ISA/210 (second sheet) (July 2022)

## INTERNATIONAL SEARCH REPORT
### Information on patent family members

| International application No. |
| --- |
| **PCT/CN2023/108852** |

| Patent document cited in search report | | | Publication date (day/month/year) | Patent family member(s) | | | Publication date (day/month/year) |
| --- | --- | --- | --- | --- | --- | --- | --- |
| CN | 115271075 | A | 01 November 2022 | None | | | |
| CN | 112368721 | A | 12 February 2021 | US | 2021182728 | A1 | 17 June 2021 |
| | | | | CA | 3102866 | A1 | 05 March 2020 |
| | | | | CA | 3102866 | C | 09 May 2023 |
| | | | | EP | 3785186 | A1 | 03 March 2021 |
| | | | | AU | 2019333268 | A1 | 17 December 2020 |
| | | | | AU | 2019333268 | B2 | 09 September 2021 |
| | | | | WO | 2020046928 | A1 | 05 March 2020 |
| CN | 112449704 | A | 05 March 2021 | None | | | |
| CN | 109784493 | A | 21 May 2019 | None | | | |
| CN | 111183432 | A | 19 May 2020 | WO | 2019063117 | A1 | 04 April 2019 |
| | | | | US | 2020125987 | A1 | 23 April 2020 |
| | | | | US | 10915831 | B2 | 09 February 2021 |
| | | | | US | 10223643 | B1 | 05 March 2019 |
| | | | | US | 2019156236 | A1 | 23 May 2019 |
| | | | | US | 10546244 | B2 | 28 January 2020 |
| CN | 114386609 | A | 22 April 2022 | None | | | |
| CN | 114429215 | A | 03 May 2022 | None | | | |
| CN | 114450697 | A | 06 May 2022 | EP | 3963518 | A1 | 09 March 2022 |
| | | | | WO | 2020231795 | A1 | 19 November 2020 |
| | | | | CA | 3137657 | A1 | 19 November 2020 |
| | | | | US | 2023032766 | A1 | 02 February 2023 |
| | | | | US | 11593696 | B2 | 28 February 2023 |
| | | | | AU | 2020274007 | A1 | 09 December 2021 |
| | | | | AU | 2020274007 | B2 | 30 March 2023 |
| US | 2022190027 | A1 | 16 June 2022 | EP | 4012627 | A1 | 15 June 2022 |
| | | | | KR | 20230118580 | A | 11 August 2023 |
| | | | | TW | 202240479 | A | 16 October 2022 |
| | | | | WO | 2022129693 | A1 | 23 June 2022 |
| | | | | IL | 303393 | A | 01 August 2023 |
| | | | | CA | 3200097 | A1 | 23 June 2022 |

Form PCT/ISA/210 (patent family annex) (July 2022)

REFERENCES CITED IN THE DESCRIPTION

**Patent documents cited in the description**

- CN 202210884668